# EUROPÄISCHE PATENTSCHRIFT

(11) **EP 1 742 525 B1**
(45) Veröffentlichungstag und Bekanntmachung des Hinweises auf die Patenterteilung: **09.07.2008**
(21) Anmeldenummer: 05701025.8
(22) Anmeldetag: 19.01.2005
(51) Int. Cl.: A01D 43/00

(54) **SELBSTFAHRENDES ERNTEFAHRZEUG**
SELF-PROPELLED HARVESTING VEHICLE
VEHICULE DE RECOLTE AUTOMOTEUR

(30) Priorität: 20.01.2004 DE 102004003011
(43) Veröffentlichungstag der Anmeldung: 17.01.2007
(73) Patentinhaber: Proton Technology GmbH, 32278 Kirchlengern (DE)
(72) Erfinder: SIEKMANN, Eckhardt, 32257 Bünde (DE); MEYER, Hermann, 32278 Kirchlengern (DE)
(74) Vertreter: Herzog, Martin
(86) Internationale Anmeldenummer: PCT/EP2005/000459
(87) Internationale Veröffentlichungsnummer: WO 2005/067694

(56) Entgegenhaltungen:
- DE-A1- 4 421 448

## Beschreibung

### TECHNISCHES GEBIET

Die Erfindung bezieht sich auf ein selbstfahrendes Erntefahrzeug mit einem Chassis, welches ein straßen- und feldgängiges Fahrwerk aufweist und an dem frontseitig ein Erntevorsatz angesetzt ist. An der Frontseite des Chassis ist ein Fahrerhaus angeordnet, hinter dem sich in Fahrzeuglängsrichtung gesehen auf dem Chassis ein Aufbau mit Verarbeitungsvorrichtungen und Speichern für das aufgenommene Erntegut, eine Biomasse befindet. Dieser Aufbau ist über eine Fördereinrichtung für die Biomasse mit dem Erntevorsatz verbunden.

### STAND DER TECHNIK

Solche Erntefahrzeuge zum Abernten von Feldfrüchten, wie insbesondere auch Getreide, sind unter anderem in Gestalt von Mähdreschern hinreichend bekannt. Derartige Erntefahrzeuge sind grundsätzlich je nach Art ihres Erntevorsatzes auch geeignet zur Aufnahme von nachwachsenden Rohstoffen als Energieträger, den sogenannten Energiepflanzen, deren verfügbare und ausnutzbare Energie von der Konzentration ihrer Biomasse abhängt. Bei biomassereichen Pflanzen zur energetischen Verwertung handelt es sich z.B. um Futterrüben oder Mais.

Bei der Gewinnung von Energie aus Biomasse stellt sich das Problem, wie nach dem Abernten mit den Energiepflanzen weiter verfahren wird. Bekannt sind bislang stationäre Anlagen, in denen aus der Biomasse die Energie gewonnen wird. Dies erfordert den Transport der abgeernteten Energiepflanzen zu einer solchen ortsfesten Anlage, was mit Verkehrsproblemen belastet ist. Zudem ist der Aufbau und der Betrieb einer derartigen Anlage an die Erfüllung behördlicher Auflagen gebunden, die an vielen ansonsten geeigneten Standorten nicht realisierbar sind.

Aus der DE 44 21 448 A1 ist demgegenüber eine mobile Erntemaschine bekannt, die Schneid-, Zuführ-, Verarbeitungs-, Abgabe- und eine Sammeleinrichtung für das Erntegut aufweist sowie über Einrichtungen zum Erzeugen eines Betriebsstoffes aus einem Teil des Erntegutes für den Betrieb der Erntemaschine verfügt.

### DIE ERFINDUNG

Der Erfindung liegt die Aufgabe zugrunde, Energiegewinnung aus der Biomasse der Energiepflanzen dezentral schon gleich während oder unmittelbar nach der Ernte der Pflanzen vornehmen zu können und dementsprechend ein landwirtschaftliches Erntefahrzeug der vorgenannten Art auszurüsten.

Diese Aufgabe wird bei einem selbstfahrenden Erntefahrzeug gemäß dem Oberbegriff des Patentanspruchs 1 dadurch gelöst, dass die Verarbeitungsvorrichtungen und Speicher im Aufbau auf dem Chassis des Fahrzeugs eine Anlage zur Verölung der Biomasse darstellen und dieser Aufbau aus Modulen in Gestalt von Containern besteht, die je für sich funktionseinheitliche Verarbeitungsvorrichtungen und/oder Speicher der Verölungsanlage beinhalten.

Demgemäß handelt es sich bei den genannten Verarbeitungsvorrichtungen und Speichern um Komponenten einer Anlage zur Verölung von Biomasse, die insgesamt auf dem Fahrzeug angeordnet ist, womit es sich um eine mobile Anlage handelt.

Der Grundgedanke der Erfindung liegt also darin, schon gleich bei dem Ernten der Energiepflanzen auf dem betreffenden landwirtschaftlichen Feld auf dem Fahrzeug die Separierung und die Verölung der Pflanzenfeststoffe vorzunehmen und die Weiterverarbeitung der flüssigen Pflanzenbestandteile wenn nicht auf dem Fahrzeug selbst so doch in unmittelbarer Nachbarschaft des Aktionsfeldes des Erntefahrzeugs vorzunehmen.

Vorteilhafte Ausgestaltungsmerkmale der Erfindung ergeben sich aus den Unteransprüchen.

### KURZBESCHREIBUNG DER ZEICHNUNGSABBILDUNGEN

Die Erfindung wird nachfolgend anhand der Zeichnung an einem Ausführungsbeispiel noch näher erläutert. Dabei zeigen:
- Fig. 1: eine perspektivische Ansicht eines selbstfahrenden Erntefahrzeuges und
- Fig. 2: eine perspektivische Ansicht eines Begleitfahrzeugs für das Erntefahrzeug gemäß Fig. 1.

### BESTER WEG ZUR AUSFÜHRUNG DER ERFINDUNG

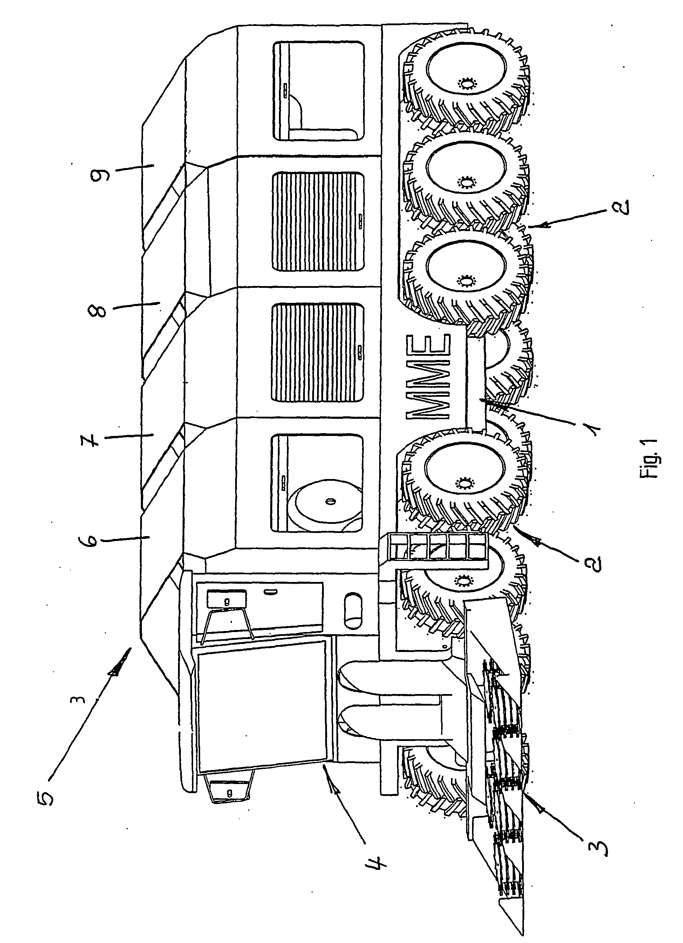

Im einzelnen weist das selbstfahrende Erntefahrzeug nach Figur 1 ein Chassis 1 auf, an welchem ein straßen- und feldgängiges Fahrwerk 2 angeordnet ist. In Fahrzeuglängsrichtung gesehen sitzt an der Frontseite des Chassis 1 ein Erntevorsatz 3, bei dem es sich um ein Maisgebiß oder dergleichen handeln kann. Grundsätzlich ist es mit dem neuen Fahrzeug auch möglich, flüssige Biomasse aufzunehmen und darauf zu verarbeiten, so kann anstelle des Erntevorsatzes 3 oder in Ergänzung dazu eine anders gestaltete Aufnahmevorrichtung für die Biomasse vorgesehen werden. Grundsätzlich soll das mobile Erntefahrzeug an den Entstehungsplatz der Energiepflanzen oder der sonstigen Biomassen verfahrbar sein, so kann man mit dem Fahrzeug einen Acker, einen Wald oder eine Kläranlage anfahren, um die Biomasse in Gestalt von Pflanzen, Trockensubstanzen und/oder Flüssigkeiten vor Ort aufzunehmen und zu verarbeiten.

Manövriert wird das Erntefahrzeug von einem Fahrerhaus 4 aus, welches an der Frontseite auf dem Chassis 1 aufgebaut ist. Hinter dem Fahrerhaus 4 befindet sich auf dem Chassis 1 ein Aufbau 5, der eine komplette Anlage zur Verölung der aufgenommenen Biomasse beherbergt. Der Aufbau 5 ist in Fahrzeuglängsrichtung von vorn nach hinten hin so gegliedert, wie es dem fortschreitenden Verölungsprozeß entspricht. So fallen am Ende des Fahrzeugs die gewonnenen Raffinate an, die vorteilhaft in drei Fraktionen, nämlich Benzin, Dieselöl und Schweröl, als weiterverwendbare Energieträger gewonnen werden.

Der Aufbau 5 auf dem Chassis 1 des Fahrzeugs ist in vier Module 6 bis 9 unterteilt, es handelt sich bei diesen Modulen 6 bis 9 um Container, die jeweils solche Verarbeitungsvorrichtungen und/oder Speicher für die Biomasse beinhalten, die in ihren Funktionen zueinander passen oder voneinander abhängig sind, soweit es die für den Verölungsprozeß zu treffenden Maßnahmen betrifft.

Die einzelnen Module 6 bis 9 sind je für sich gesehen autark ausgebildet, was bedeutet, daß sie jeweils eine eigene Energieversorgung, eine eigene Steuereinrichtung und/oder eine eigene Antriebsmaschine aufweisen, wobei letztere je nach den Erfordernissen ausgelegt ist. So kann es sich bei der Antriebsmaschine um einen Verbrennungsmotor handeln, dem ein elektrischer Generator für die Energieversorgung nachgeordnet sein kann. Die Steuereinrichtung jedes Moduls 6 bis 9 ist so ausgeführt, daß sie mit den Steuereinrichtungen der jeweils anderen Module 6 bis 9 kommunizieren kann, um die in den Modulen 6 bis 9 vorzunehmenden Verfahrensabläufe aufeinander abstimmen zu können.

Des weiteren ist jedes der Module 6 bis 9 mit mechanischen und/oder elektrischen Schnittstellen ausgestattet, wobei insbesondere die mechanischen Schnittstellen dazu dienen, in das einzelne Modul 6 bis 9 den jeweiligen Biomassenanteil einzugeben und auch aus dem Modul wieder abgeben oder entnehmen zu können.

Alle Module 6 bis 9 sind miteinander dimensionsgleich. Die Adaptionsfläche auf dem Chassis 1 zur Aufnahme der Module 6 bis 9 kann deshalb in einzelne Rasterflächen gegliedert sein, die an den einheitlichen, vorzugsweise rechteckigen Grundriß der Module 6 bis 9 angepaßt sind.

In der Regel wird man mit den vier dargestellten Modulen 6 bis 9 für die Durchführung sämtlicher Maßnahmen des Verölungsprozesses auf dem Fahrzeug auskommen. Es können auch weniger Module dann erforderlich sein, wenn die aufgenommene Biomasse trocken ist, wie es bei Stroh der Fall sein kann. Je nach dem Volumen der flüssigen Bestandteile der Biomasse kann auch eine größere Anzahl von Modulen 6 bis 9 notwendig werden, um ein ausreichendes Speichervolumen zur Verfügung stellen zu können.

Im Normalfall werden auf dem betreffenden landwirtschaftlichen Feld von dem Erntefahrzeug mittels des Erntevorsatzes 3 Energiepflanzen abgeerntet und aufgenommen, die über eine geeignete, in der Zeichnung nicht dargestellte Zuführungsvorrichtung in das erste Modul 6 hinter dem Fahrerhaus 4 eingeleitet wird. Dieses erste Modul beinhaltet eine Verarbeitungsvorrichtung, mit der die zugeführte Biomasse zerkleinert und gepreßt wird. Dadurch wird die Biomasse in einen Feststoffanteil und in einen Anteil aus Pflanzensäften getrennt. Zu der Verarbeitungsvorrichtung in dem Modul 6 gehört demgemäß ein Cutter zum Zerkleinern der Biomasse und eine Presse zum Verpressen. Angetrieben werden diese beiden Aggregate durch einen Verbrennungs- oder Elektromotor, der mit in dem Modul 6 installiert ist. Die Treibstoffversorgung des Verbrennungsmotors erfolgt zweckmäßig in sogenannter Eigenversorgung über die durch den Verölungsprozeß gewonnenen Raffinate, wie über das Dieselöl oder das Benzin.

Das zweite Modul 7, welches in Fahrtrichtung nach hinten hin an das erste Modul 6 anschließt, enthält im wesentlichen einen Speicher oder einen Tank für die Pflanzensäfte. Je nach dem anfallenden Volumen der Pflanzensäfte kann es erforderlich sein, in dem ersten Modul 6 und/oder in dem zweiten Modul 7 die Pflanzensäfte aufzukonzentrieren. Das den Pflanzensäften entzogene Wasser wird entweder in den Modulen 6, 7 gespeichert oder über eine geeignete Auslaßvorrichtung aus den Modulen 6, 7 abgeführt. Dies empfiehlt sich, weil bestimmte Biomassen einen überwiegenden Wasseranteil aufweisen, so hat die als Energieträger in Betracht kommende Futterrübe einen Wasseranteil von mehr als 80 %. Der Wasserauslaß aus den Modulen 6, 7 kann vor Ort erfolgen, so wird er gleich von dem abgeernteten Ackerboden aufgenommen .

Das dritte Modul 8, welches an das Speichermodul 7 anschließt, ist ebenfalls ein Speichermodul, denn hier wird die aus der Biomasse abgesonderte Trockensubstanz gespeichert. Hat die Trockensubstanz noch eine Restfeuchte, die für den nachfolgenden Verarbeitungsprozeß hinderlich ist, beinhaltet das Modul 8 zusätzlich eine Trocknungseinrichtung.

Das vierte und letzte Modul 9 auf dem Fahrzeug ist als "Verölungsmodul" zu bezeichnen. Es wird mit den in dem Modul 8 gespeicherten Trockensubstanzen versorgt und beinhaltet eine diese Feststoffe verarbeitende, miniaturisierte Kompaktraffinerie, die auch als "Miniraffinerie" bezeichnet werden kann. Mit dieser kompakten Einrichtung wird die Verölung der Pflanzenfeststoffe vorgenommen und ein fraktioniertes Raffinat erzeugt, dessen Fraktionen aus Benzin, Dieselöl oder Schweröl bestehen.

Die im Container des Moduls 7 gespeicherten Pflanzensäfte oder Pflanzensaftkonzentrate könnten zwar grundsätzlich auf dem Fahrzeug weiter verarbeitet werden, dies empfiehlt sich jedoch aus Platzgründen nicht. Deshalb sind in Ergänzung zu den Modulen 6 bis 9, die auf dem Fahrzeug mitgeführt werden, weitere Module 10 bis 13 vorgesehen, welche Figur 3 veranschaulicht.

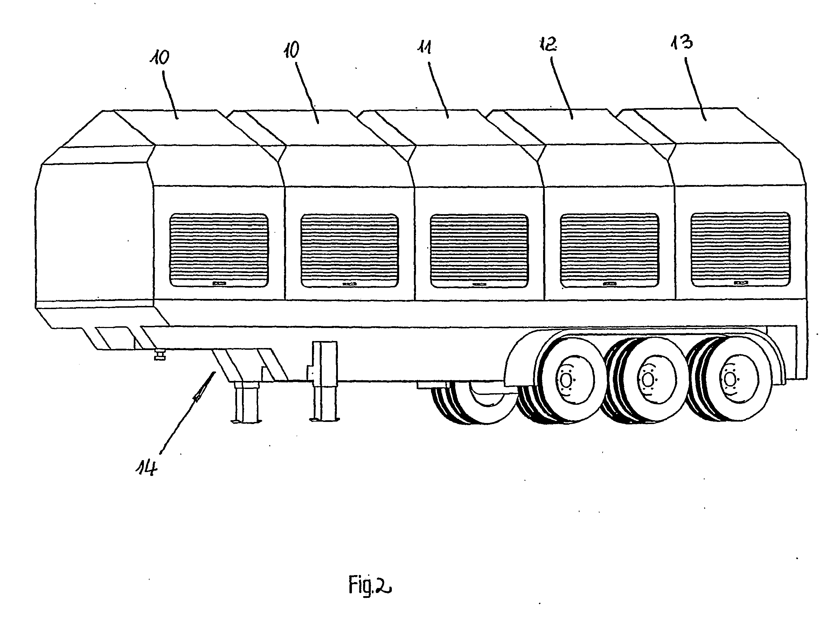

Die weiteren Module 10 bis 13 haben das gleiche Format wie die auf dem Fahrzeug mitgeführten Module 6 bis 9. Sie können deshalb, sofern dies im Verarbeitungsprozeß möglich ist, auch mit denen auf dem Fahrzeug getauscht werden. Die zusätzlichen Module 10 bis 13 sind grundsätzlich ebenfalls mobil, wenngleich sie vorübergehend ortsfest am Feld- oder Ackerrand aufgestellt werden können. Die weiteren Module 10 bis 13 sind auf einem eigenen Fahrzeug 14 transportierbar, welches gemäß Figur 2 als Auflieger konzipiert sein kann. Wichtig ist, daß die weiteren Module 10 bis 13 im Arbeitsbereich des Fahrzeugs gemäß Figur 1 verfügbar sind und von diesem angefahren werden können. Denn es wird zum Teil eine Überleitung der in den fahrzeugeigenen Modulen 6 bis 9 enthaltenen Medien vorgenommen, die entsprechend in einen der weiteren Container der Module 10 bis 13 überführt werden. Dies ist auch dann möglich, wenn die zusätzlichen Module 10 bis 13 auf dem sie transportierenden Fahrzeug 14 verbleiben.

Die zusätzlichen Module 10 bis 13 auf dem Fahrzeug 14 umfassen zwei Speichermodule 10, die mit Tanks ausgestattet sind, um die im Modul 9 des Erntefahrzeugs erzeugten, fraktionierten Raffinate aufnehmen zu können. Es versteht sich, daß dementsprechend das fahrzeugeigene Modul 9 mit den Modulen 10 auf dem Zusatzfahrzeug 14 zwecks Flüssigkeitsüberleitung verbunden werden kann. Ein solches für die Speicherung der fraktionierten Destillate vorgesehenes Modul 10 kann grundsätzlich auch auf dem Fahrzeug gemäß Figur 1 mitgeführt werden. Dies ist besonders dann möglich, wenn auf dem Fahrzeug das Speichermodul 7 für die flüssigen Pflanzenstoffe entbehrlich ist, wie es bei ausreichend trockener Biomasse der Fall sein kann.

Das weitere Modul 11 auf dem Zusatzfahrzeug 14 ist ein für die Pflanzensäfte oder Pflanzensaftkonzentrate vorgesehenes Speichermodul, die von dem fahrzeugeigenen Modul 7 übernommen werden. Ebenso wie bei den Modulen 10 kann auch bei dem Modul 11 eine Schnellbetankung vorgesehen werden, um die Verweildauer des an die zusätzlichen Module 10 bis 13 herangefahrenen Erntefahrzeugs so kurz wie möglich zu halten.

An das Speichermodul 11 für die Pflanzensäfte oder Pflanzensaftkonzentrate ist ein Modul 12 angegliedert, in welchem die Verarbeitung der flüssigen Pflanzenbestandteile vorgenommen wird. Es handelt sich bei dem Modul 12 um ein sogenanntes Fermentionsmodul, denn darin wird unter Anwendung eines Fermentationsverfahrens unter Einsatz von Bakterienkulturen aus den flüssigen Pflanzenbestandteilen Methangas erzeugt. Die für das Modul 12 erforderliche Fermentationsanlage ist ebenfalls eine Kompaktanlage, die raumsparend in dem Container des Moduls 12 untergebracht werden kann.

Das in dem Modul 12 erzeugte Methangas wird verflüssigt und in dem weiteren Modul 13 auf dem Zusatzfahrzeug 14 gespeichert, welches mit einem entsprechenden Druckgasbehälter ausgestattet ist. Die Verflüssigung des Methangases erfolgt entweder in dem Fermentationsmodul 12 oder in dem Speichermodul 13.

Ebenso wie die fahrzeugeigenen Module 6 bis 9 sind auch die weiteren Module 10 bis 13 auf dem Zusatzfahrzeug 14 als autarke Module ausgebildet und mit einer entsprechenden Energieversorgung, einem kommunizierenden Steuerungssystem und einer gegebenenfalls erforderlichen Antriebsmaschine ausgestattet. So können für das Umfüllen von einem Modul in ein anderes Pumpen für den Flüssigkeitstransport betrieben werden, ebenso wie die Förderanlagen für die Feststoffe.

Alle Container, also sowohl die auf dem Erntefahrzeug mitfahrenden Container 6 bis 9 als auch die Container 10 bis 13 auf dem Zusatzfahrzeug 14 lassen sich sämtlich miteinander fest verkuppeln, dies sowohl in ihrer Längs- als auch in Querausrichtung. Entsprechend den üblichen Transportcontainern, wie sie als Schiffscontainer verwendet werden, haben die im Grundriß rechteckigen Module 6 bis 13 eine Breite, die einem solchen Container entspricht. Der Länge eines derartigen Transportcontainers entspricht ein ganzzahliges Vierfaches der Länge der Module 6 bis 13, so daß beispielsweise drei oder vier dieser Module 6 bis 13 in aneinander angekoppelter Anordnung exakt die Länge eines Schiffscontainers aufweisen. In praktischer Ausführung betragen die Abmessungen der Module 6 bis 13: Länge 3 m, Breite 2,40 m, Höhe 2,40 m, womit sich bei vier aneinander angekoppelten Modulen 6 bis 13 in Längsrichtung eine Gesamtlänge von 12 m ergibt bei einer Breite von 2, 40 m, was exakt den Abmessungen eines Schiffscontainers entspricht. So kann eine gesamte Anlagen- oder Produktionseinheit in rationeller Weise auch unabhängig von dem Erntefahrzeug nach Figur 1 oder dem Zusatzfahrzeug 14 transportiert werden, soweit größere Entfernungen zu überbrücken sind, die insbesondere nur auf dem Seeweg zurückgelegt werden können.

## Patentansprüche

1. Selbstfahrendes Erntefahrzeug mit einem Chassis (1), welches ein straßen- und feldgängiges Fahrwerk (2) aufweist und an dem frontseitig ein Erntevorsatz (3) angesetzt ist, wobei auf dem Chassis (1) an dessen Frontseite ein Fahrerhaus (4) angeordnet ist und sich in Fabrzeuglängsrichtung hinter dem Fahrerhaus (4) auf dem Chassis (1) ein Aufbau (5) mit Verarbeitungsvorrichtungen und Speichern für das aufgenommene Erntegut, eine Biomasse, befindet, welcher über eine Fördereinrichtung für die Biomasse mit dem Erntevorsatz (3) verbunden ist und die Verarbeitungsvorrichtungen und Speicher im Aufbau (5) auf dem Chassis (1) eine Anlage zur Verölung der Biomasse darstellen und **dadurch gekennzeichnet ist, dass** der Aufbau (5) auf dem Chassis (1) aus Modulen (6 - 9) in Gestalt von Containern besteht, die je für sich funktionseinheitliche Verarbeitungsvorrichtungen und/oder Speicher der Verölungsanlage beinhalten.

2. Erntefahrzeug nach Anspruch 1, **dadurch gekennzeichnet, dass** jedes der Module (6 - 9) auf dem Chassis (1) autark ist und demgemäß eine eigene Energieversorgung, Steuereinrichtung und/oder Antriebsmaschine für den Abschnitt des jeweiligen Verfahrensablaufs des Verölungsprozesses aufweist.

3. Erntefahrzeug nach Anspruch 2, **dadurch gekennzeichnet, dass** jedes der Module (6 - 9) mechanische und/oder elektrische Schnittstellen zum Verknüpfen mit den weiteren Modulen (6 - 9) hat.

4. Erntefahrzeug nach Anspruch 2 oder 3, **dadurch gekennzeichnet, dass** die Module (6 - 9) auf dem Chassis (1) dimensionsgleich miteinander sind.

5. Erntefahrzeug nach einem der Ansprüche 1 bis 4 , **dadurch gekennzeichnet, dass** die Module (6 - 9) auf dem Chassis (1) in Fahrzeuglängsrichtung hintereinander angeordnet sind, wobei die Funktionen der Vorrichtungen und/oder Speicher in Fahrzeuglängsrichtung von vom nach hinten hin an die aufeinanderfolgenden Verfahrensmaßnahmen zur Durchführung des Verölungsprozesses angepasst sind.

6. Erntefahrzeug nach Anspruch 5, **dadurch gekennzeichnet, dass** für die Verfahrensmaßnahmen zur Durchführung des Verölungsprozesses vier Module (6 - 9) auf dem Chassis (1) vorgesehen sind.

7. Erntefahrzeug nach Anspruch 6, **dadurch gekennzeichnet, dass** das in Fahrzeuglängsrichtung hinter dem Fahrerhaus (4) anschließende erste Modul (6) Vorrichtungen zum Zerkleinern und Verpressen der Biomasse enthält.

8. Erntefahrzeug nach Anspruch 7, **dadurch gekennzeichnet, dass** das an das erste Modul (6) anschließende zweite Modul (7) einen Speicher für die aus der Biomasse herausgepressten Pflanzensäfte enthält.

9. Erntefahrzeug nach Anspruch 7 oder 8, **dadurch gekennzeichnet, dass** das erste Modul (6) und/oder das zweite Modul (7) mit Vorrichtungen zum Konzentrieren der Pflanzensäfte ausgestattet sind.

10. Erntefahrzeug nach Anspruch 8 oder 9, **dadurch gekennzeichnet, dass** das an das zweite Modul (7) anschließende dritte Modul (8) einen Speicher für die aus der Biomasse im ersten Modul (6) gewonnenen Pflanzenfeststoffe enthält.

11. Erntefahrzeug nach Anspruch 10, **dadurch gekennzeichnet, dass** das an das dritte Modul (8) anschließende vierte Modul (9) eine miniaturisierte Kompaktraffinerie für die Verölung der Pflanzenfeststoffe enthält.

12. Erntefahrzeug nach einem der Ansprüche 1 bis 11, **dadurch gekennzeichnet, dass** in Ergänzung zu den auf dem Fahrzeug mitgeführten Modulen (6 - 9) weitere Module (10 - 13) für die Speicherung und/oder weitere Verarbeitung der Biomassenbestandteile, die bei den auf dem Fahrzeug mitgeführten Modulen (6 - 9) anfallen, vorgesehen sind.

13. Erntefahrzeug nach Anspruch 12, **dadurch gekennzeichnet, dass** die weiteren Module (10-13) mit den auf dem Fahrzeug mitgeführten Modulen (6 - 9) dimensionsgleich sind.

14. Erntefahrzeug nach Anspruch 12 oder 13, **dadurch gekennzeichnet, dass** die weiteren Module (10 - 13) auf einem Zusatzfahrzeug (14) angeordnet sind.

15. Erntefahrzeug nach einem der Ansprüche 12 bis 14, **dadurch gekennzeichnet, dass** die weiteren Module (10 - 13) für eine ortsfeste Aufstellung benachbart der Erntefläche vorgesehen sind.

16. Erntefahrzeug nach einem der Ansprüche 12 bis 15, **dadurch gekennzeichnet, dass** die weiteren Module (10-13) zumindest ein Speichermodul (10) zur Aufnahme der im vierten auf dem Fahrzeug mitgeführten Modul (9) anfallenden Raffinate umfassen.

17. Erntefahrzeug nach einem der Ansprüche 12 bis 16, **dadurch gekennzeichnet, dass** die weiteren Module (10-13) zumindest ein weiteres, zweites Speichermodul (11) zur Aufnahme der im zweiten auf dem Fahrzeug mitgeführten Modul (7) zwischengespeicherten Pflanzensäfte oder Pflanzensaftkozentrate umfassen.

18. Erntefahrzeug nach Anspruch 17, **dadurch gekennzeichnet, dass** an das zweite Speichermodul (11) der weiteren Module (10 - 13) ein Modul (12) mit einer Fermentationseinrichtung zur Gewinnung von Methangas aus den Pflanzensäften oder Pflanzensaftkonzcntraten angegliedert ist.

19. Erntefahrzeug nach Anspruch 18, **dadurch gekennzeichnet, dass** in Ergänzung zu dem Modul (12) mit der Fermentationseinrichtung ein Modul (13) mit einem Druckgasspeicher für das gewonnene Methangas vorgesehen ist.

20. Erntefahrzeug nach Anspruch 18 oder 19, **dadurch gekennzeichnet, dass** das Modul (12) mit der Fermentationseinrichtung oder das Modul (13) mit dem Druckgasspeicher mit einer Gasverflüssignngseinrichtung ausgestattet ist.

21. Erntefahrzeug nach einem der Ansprüche 12 bis 20, **dadurch gekennzeichnet, dass** die die Module (6-13) bildenden Container einen rechteckigen Grundriß haben, dessen Breite gleich der Breite eines genormten Transportcontainer, wie eines Schiffscontainers, und dessen Länge als ganzzahliges Mehrfaches der Länge eines solchen Transportcontainers entspricht, und ferner Kupplungsvorrichtungen an den Modulen (6-13) angeordnet sind, mittels der eine entsprechende Anzahl der Module (6-13) mit der resultierenden Länge eines derartigen Transportcontainers fest miteinander verbindbar ist

## Claims

1. Self-propelled harvesting vehicle with a chassis (1), which has running gear (2) capable of travelling on roads and fields and on the front side of which a harvesting attachment (3) is mounted, a driver's cab (4) being arranged on the front side of the chassis (1) and a body (5) with processing devices and means for storing the received harvested crop, a biomass, being located on the chassis (1), behind the driver's cab (4) in the longitudinal direction of the vehicle, which body is connected to the harvesting attachment (3) by means of a device for conveying the biomass, and the processing devices and storage means in the body (5) on the chassis (1) forming a system for synthesising oil from the biomass, **characterised in that** the body (5) on the chassis (1) consists of modules (6 - 9) in the form of containers each containing processing devices which are functionally uniform per se and/or means for storing the oil synthesising system.

2. Harvesting vehicle according to claim 1, **characterised in that** each of the modules (6 - 9) on the chassis (1) is autonomous and accordingly has its own power supply, control means and/or drive motor for the portion of the respective sequence of operations of the oil synthesising process.

3. Harvesting vehicle according to claim 2, **characterised in that** each of the modules (6 - 9) has mechanical and/or electric interfaces for linking to the further modules (6-9).

4. Harvesting vehicle according to claim 2 or 3, **characterised in that** the modules (6 - 9) on the chassis (1) have the same dimensions.

5. Harvesting vehicle according to one of claims 1 to 4, **characterised in that** the modules (6 - 9) on the chassis (1) are arranged one behind another in the longitudinal direction of the vehicle, the functions of the devices and/or storage means being adapted, from the front to the rear in the longitudinal direction of the vehicle, to the successive procedural measures for carrying out the oil synthesising process.

6. Harvesting vehicle according to claim 5, **characterised in that** four modules (6 - 9) are provided on the chassis (1) for the procedural measures for carrying out the oil synthesising process.

7. Harvesting vehicle according to claim 6, **characterised in that** the first module (6), adjoining the driver's cab (4) behind it in the longitudinal direction of the vehicle, contains devices for comminuting and compressing the biomass.

8. Harvesting vehicle according to claim 7, **characterised in that** the second module (7), adjoining the first module (6), contains a means for storing the plant juices pressed out of the biomass.

9. Harvesting vehicle according to claim 7 or 8, **characterised in that** the first module (6) and/or the second module (7) are equipped with devices for concentrating the plant juices.

10. Harvesting vehicle according to claim 8 or 9, **characterised in that** the third module (8), adjoining the second module (7), contains a means for storing the plant solids obtained from the biomass in the first module (6).

11. Harvesting vehicle according to claim 10, **characterised in that** the fourth module (9), adjoining the third module (8E), contains a miniaturised compact refinery for synthesising oil from the plant solids.

12. Harvesting vehicle according to one of claims 1 to 11, **characterised in that**, in addition to the modules (6 - 9) carried on the vehicle, further modules (10-13) are provided for the storage and/or further processing of the constituents of the biomass which accumulate in the modules (6 - 9) carried on the vehicle.

13. Harvesting vehicle according to claim 12, **characterised in that** the further modules (10 - 13) have the same dimensions as the modules (6 - 9) carried on the vehicle.

14. Harvesting vehicle according to claim 12 or 13, **characterised in that** the further modules (10 - 13) are arranged on an additional vehicle (14).

15. Harvesting vehicle according to one of claims 12 to 14, **characterised in that** the further modules (10- 13) are provided for stationary positioning in the vicinity of the harvesting area.

16. Harvesting vehicle according to one of claims 12 to 15, **characterised in that** the further modules (10 - 13) comprise at least one storage module (10) for receiving the raffinates which accumulate in the fourth module (9) carried on the vehicle.

17. Harvesting vehicle according to one of claims 12 to 16, **characterised in that** the further modules (10 - 13) comprise at least one further, second storage module (11) for receiving the plant juices or plant juice concentrates stored temporarily in the second module (7) carried on the vehicle.

18. Harvesting vehicle according to claim 17, **characterised in that** a module (12) with a fermentation means for obtaining methane gas from the plant juices or plant juice concentrates is joined to the second storage module (11) of the further modules (10-13).

19. Harvesting vehicle according to claim 18, **characterised in that**, in addition to the module (12) with the fermentation means, a module (13) is provided with a compressed gas storage means for storing the methane gas obtained.

20. Harvesting vehicle according to claim 18 or 19, **characterised in that** the module (12) with the fermentation means or the module (13) with the compressed gas storage means is equipped with a gas liquefaction means.

21. Harvesting vehicle according to one of claims 12 to 20, **characterised in that** the containers forming the modules (6 - 13) have a rectangular outline, the width of which is equal to the width of a standardised transport container, such as a ship container, and the length of which corresponds, as an integral multiple, to the length of a transport container of this type, and furthermore coupling devices, by means of which a corresponding number of the modules (6 - 13) having the resulting length of a transport container of this type can be rigidly connected to one another, are arranged on the modules (6 - 13).

## Revendications

1. Véhicule de récolte automotrice comprenant un châssis (1) qui présente un mécanisme de roulement (2) pouvant rouler sur les routes et dans les champs et sur lequel se trouve, sur le coté frontal, un adaptateur de récolte (3), dans quel cas sur le châssis (1), il y a, sur le coté frontal de celui-ci, une cabine (4) et, dans le sens longitudinal du véhicule, derrière la cabine (4), sur le châssis (1), un corps (5) équipé de dispositifs de synthétisation et de réservoirs pour le produit récolté, une biomasse, corps relié à l'adaptateur de récolte (3) à l'intermédiaire d'un dispositif d'acheminement de la biomasse, et les dispositifs de synthétisation et les réservoirs dans le corps (5) sur le châssis (1) constituant une installation de synthétisation de l'huile à partir de la biomasse et **caractérisé en ce que** le corps (5) sur le châssis (1) est constitué de modules (6 - 9) en forme de conteneurs, contenant chacun per se des dispositifs de traitement de fonction homogène et/ou des réservoirs de l'installation de synthétisation d'huile.

2. Véhicule de récolte selon la revendication 1, **caractérisé en ce que** chacun des modules (6 - 9) sur le châssis (1) est autonome et présente en conséquence sa propre alimentation énergétique, son propre dispositif de commande et/ou son propre entraînement pour la partie du cycle concernée du processus de synthétisation d'huile.

3. Véhicule de récolte selon la revendication 2, **caractérisé en ce que** chaque module (6 - 9) a des interfaces mécaniques et/ou électriques qui le relient aux autres (6 - 9).

4. Véhicule de récolte selon la revendication 2 ou 3, **caractérisé en ce que** les modules (6 - 9) sur le châssis (1) ont les mêmes dimensions.

5. Véhicule de récolte selon l'une quelconque des revendications 1 à 4, **caractérisé en ce que** les modules (6 - 9) sur le châssis (1) sont disposés l'un derrière l'autre dans le sens longitudinal du véhicule, les fonctions des dispositifs et/ou des réservoirs dans le sens longitudinal du véhicule, de l'avant vers l'arrière, sont adaptés aux étapes successives du processus de synthétisation d'huile.

6. Véhicule de récolte selon la revendication 5, **caractérisé en ce que** quatre modules (6 - 9) sur le châssis (1) sont prévus pour les étapes du processus de synthétisation d'huile.

7. Véhicule de récolte selon la revendication 6, **caractérisé en ce que** le premier module (6) adjacent à la cabine (4) dans le sens longitudinal du véhicule contient des dispositifs pour broyer et compresser la biomasse.

8. Véhicule de récolte selon la revendication 7, **caractérisé en ce que** le deuxième module (7) adjacent au premier (6) contient un réservoir pour les jus végétaux extraits par pression de la biomasse.

9. Véhicule de récolte selon la revendications7 ou 8, **caractérisé en ce que** le premier module (6) et/ou le deuxième module (7) sont équipés de dispositifs pour concentrer les jus végétaux.

10. Véhicule de récolte selon la revendication 8 ou 9, **caractérisé en ce que** le troisième module (8) adjacent au deuxième module (7) comporte un réservoir pour les matières végétales solides obtenues à partir de la biomasse dans le premier module (6).

11. Véhicule de récolte selon la revendication 10, **caractérisé en ce que** le quatrième module (9) adjacent au troisième module (8) contient une raffinerie compacte miniaturisée pour la synthétisation d'huile des matières végétales solides.

12. Véhicule de récolte selon l'une quelconque des revendications 1 à 11, **caractérisé en ce que**, en complément des modules (6 - 9) embarqués sur le véhicule, d'autres modules (10 - 13) sont prévus pour le stockage et/ou le retraitement des constituants de la biomasse produits avec les modules (6 - 9) embarqués sur le véhicule.

13. Véhicule de récolte selon la revendication 12, **caractérisé en ce que** les autres modules (10 - 13) ont les mêmes dimensions que les modules (6 - 9) embarqués sur le véhicule.

14. Véhicule de récolte selon la revendication 12 ou 13, **caractérisé en ce que** les autres modules (10 - 13) sont disposés sur un véhicule additionnel (14).

15. Véhicule de récolte selon l'une quelconque des revendications 12 à 14, **caractérisé en ce que** les autres modules (10 - 13) sont prévus pour être installés de manière stationnaire à proximité de la surface à récolter.

16. Véhicule de récolte selon l'une quelconque des revendications 12 à 15, **caractérisé en ce que** les autres modules (10 - 13) comprennent au moins un module de stockage (10) qui reçoit les produits raffinés produits dans le quatrième module (9) embarqué sur le véhicule.

17. Véhicule de récolte selon l'une quelconque des revendications 12 à 16, **caractérisé en ce que** les autres modules (10 - 13) comprennent au moins un autre, deuxième, module de stockage (11) qui reçoit les jus végétaux ou les concentrés de jus végétaux entreposés dans le deuxième module (7) embarqué sur le véhicule.

18. Véhicule de récolte selon la revendication 17, **caractérisé en ce qu'**un module (12) comportant un dispositif de fermentation permettant l'obtention de gaz méthane à partir des jus végétaux ou des concentrés de jus végétaux, est rattaché au deuxième module de stockage (11) des autres modules (10 - 13).

19. Véhicule de récolte selon la revendication 18, **caractérisé en ce que**, en complément au module (12) comportant le dispositif de fermentation, on prévoit un module (13) comportant un réservoir de gaz comprimé pour le gaz méthane obtenu.

20. Véhicule de récolte selon la revendication 18 ou 19, **caractérisé en ce que** le module (12) équipé du dispositif de fermentation ou le module (13) du réservoir de gaz comprimé est équipé d'un dispositif de liquéfaction du gaz.

21. Véhicule de récolte selon l'une quelconque des revendications 12 à 20, **caractérisé en ce que** les conteneurs formant les modules (6 - 13) ont une forme rectangulaire dont la largeur est égale à la largeur d'un conteneur de transport normalisé tel qu'un conteneur maritime, et dont un multiple entier de la longueur correspond à la longueur d'un tel conteneur de transport, et de plus il y a des dispositifs de couplage sur les modules (6 - 13) au moyen desquels un nombre correspondant de modules (6-13) ayant la longueur qui en résulte d'un tel conteneur de transport peuvent être reliés fixement entre eux.
